Europäisches Patentamt

(19) European Patent Office

Office européen des brevets

(11) Numéro de publication : **0 143 063**
**B1**

(12) **FASCICULE DE BREVET EUROPÉEN**

(45) Date de publication du fascicule du brevet :
27.05.87

(51) Int. Cl.⁴ : **F 16 L 41/06**

(21) Numéro de dépôt : **84420180.6**

(22) Date de dépôt : **19.10.84**

(54) **Outillage pour le perçage de canalisations de fluide sous pression.**

(30) Priorité : **20.10.83 FR 8317109**

(43) Date de publication de la demande :
**29.05.85 Bulletin 85/22**

(45) Mention de la délivrance du brevet :
**27.05.87 Bulletin 87/22**

(84) Etats contractants désignés :
**AT BE CH DE GB IT LI LU NL SE**

(56) Documents cités :
**FR-A- 2 283 382**
**FR-A- 2 513 349**
**US-A- 2 171 575**
**US-A- 2 287 354**
**US-A- 3 922 107**

(73) Titulaire : **Amblard, Albert**
**22 rue des Essarts**
**F-69500 Bron, Rhône (FR)**

(72) Inventeur : **Amblard, Albert**
**22 rue des Essarts**
**F-69500 Bron, Rhône (FR)**

(74) Mandataire : **Bratel, Gérard et al**
**Cabinet GERMAIN & MAUREAU Le Britannia - Tour C**
**20, boulevard E. Deruelle**
**F-69003 Lyon (FR)**

Jouve, 18, rue St-Denis, 75001 Paris, France

## Description

La présente invention concerne un outillage permettant le perçage de canalisations de fluides sous pression, sans vidange, en utilisant une prise en « Té » prémontée sur la canalisation à percer et munie d'une vanne d'isolement, cet outillage s'adaptant sur la vanne et comprenant un fourreau à l'intérieur duquel est monté un outil de perçage rotatif, tel que mèche ou forêt à rainures hélicoïdales, déplaçable axialement et apte à être approché de la canalisation à percer en traversant la vanne laissée en position ouverte, l'outil de perçage étant prévu pour être accouplé à un organe moteur d'entraînement en rotation.

Des outillages de ce genre, déjà connus par exemple par le document FR-A-2 210 741 ou le document FR-A-2 283 382, permettent le perçage d'une canalisation existante véhiculant un fluide sous pression, gazeux ou liquide, sans nécessité de vidanger la canalisation, en vue du branchement d'un conduit de dérivation sur cette canalisation.

Pour l'utilisation d'un tel outillage, le fourreau traversé par la tige de l'outil de perçage est vissé directement sur la vanne d'isolement. La vanne est ouverte et l'outil est engagé au travers de cette vanne jusque dans la région de la prise en « Té » prémontée sur la canalisation à percer. L'outil est mis en action pour percer un trou dans cette canalisation, puis il est retiré en arrière pour permettre la fermeture de la vanne. Sur cette vanne qui reste en place, peut être fixé le départ d'un conduit quelconque. Ainsi est réalisé, sans vidange et pratiquement sans fuite du fluide, un branchement sur une canalisation en charge.

Dans de nombreux cas, l'outil de perçage est une fraise-cloche, éventuellement complétée par un foret central, qui découpe une rondelle dans la paroi de la canalisation à percer (voir le document précité FR-A-2 210 741, ou d'autres documents décrivant des dispositifs analogues tels que les documents US-A-2 171 575 et US-A-2 287 354 ou GB-A-1 368 751). Ces outillages n'assurent pas une élimination des copeaux et autres débris d'usinage, qui stagnent dans la région de la prise en « Té » prémontée sur la canalisation et de la vanne, et risquent alors de détériorer ces parties qui ne bénéficient d'aucune protection.

L'outil de perçage peut aussi être une mèche ou un foret comportant des rainures hélicoïdales sur une partie de sa longueur ; c'est le cas dans le document FR-A-2 283 382 précité, mais le dispositif selon ce document ne résout pas le problème de l'élimination des copeaux et autres déchets d'usinage.

Ce problème est partiellement résolu, dans un dispositif analogue, par le document DE-C-322 665 où l'outil de perçage, conformé en foret avec des rainures hélicoïdales, permet d'éliminer les copeaux en les collectant dans une chambre annulaire entourant l'outil. Cette chambre est située au niveau de la prise en « Té », et elle est délimitée extérieurement par un manchon qui entoure l'outil et qui doit être introduit, avec cet outil, au travers de la vanne. Compte tenu de ceci, le diamètre et le volume de ladite chambre sont très limités, et par ailleurs la vidange de cette chambre est extrêmement difficile.

Par ailleurs, toujours dans le cas d'un outil de perçage conformé en foret, cet outil ne bénéficie soit d'aucune protection (cas du document FR-A-2 283 382 précité), soit que d'une protection limitée à une partie de sa longueur (cas du document DE-C-322 665 précité), d'où un risque de détérioration des joints de la vanne d'isolement.

La présente invention élimine tous ces inconvénients, en fournissant un dispositif perfectionné rendant l'élimination de copeaux plus commode et assurant, simultanément, une protection totale des organes de l'outillage.

A cet effet, dans l'outillage pour le perçage de canalisation de fluide sous pression selon l'invention, l'outil de perçage est entouré d'un canon de guidage et de protection apte à traverser la vanne d'isolement en position d'ouverture et lié au moins axialement au fourreau, tandis qu'une chambre annulaire de stockage des copeaux, située en arrière du canon de guidage et de protection et de la vanne d'isolement, est délimitée entre le fourreau et l'outil de perçage.

Le canon de guidage protège ainsi l'outil dans toute sa traversée de la prise en « Té » et de la vanne d'isolement, tandis que la chambre annulaire de stockage des copeaux, située en arrière de ladite vanne, peut être réalisée avec des dimensions importantes, donc avec une grande capacité, quels que soient les diamètres du foret et du passage libre offert par la vanne d'isolement à l'état ouvert. En cours de fonctionnement, l'outil de perçage entraîne mécaniquement et de façon constante les copeaux et autres déchets d'usinage vers l'arrière par ses rainures hélicoïdales agissant comme une vis sans fin en tournant à l'intérieur du canon. Celui-ci interdit tout contact des copeaux avec la prise en « Té » prémontée sur la canalisation et avec la vanne d'isolement, donc isole et protège intégralement ces organes vis-à-vis de l'outil de perçage, et il oblige les copeaux à se rassembler dans la chambre de stockage prévue à cet effet. La position reculée de la chambre annulaire de stockage des copeaux permet, de plus, une vidange aisée de cette chambre. De préférence, le canon de guidage et de protection traverse librement un raccord de liaison vissé sur la vanne d'isolement, mais non lié mécaniquement audit canon, l'étanchéité entre le raccord de liaison et le canon étant assuré par un joint annulaire. Ainsi, l'outillage conforme à l'invention constitue un ensemble autonome et complet, utilisable sans liaison le solidarisant directement avec la prise en « Té » ou la vanne d'isolement, donc ne reportant pas les efforts sur ces organes.

Suivant une forme de réalisation préférée de l'invention, l'outillage comprend une bague d'avance vissable sur un filetage de l'extrémité postérieure du fourreau ; une broche d'entraînement de l'outil de perçage est montée à l'intérieur de la bague d'avance et liée axialement à ladite bague.

La vitesse d'avance de l'outil peut ainsi être contrôlée par l'opérateur qui donne une rotation lente à la bague pour déplacer axialement la broche d'entraînement à laquelle est lié l'outil de perçage.

Avantageusement, un joint annulaire à lèvre, protégé par une rondelle, est monté entre le fourreau et la broche d'entraînement de l'outil de perçage, pour réaliser l'étanchéité à l'arrière de la chambre annulaire de stockage des copeaux, évitant ainsi toute fuite permanente et assurant la propreté.

Le filetage du fourreau, sur lequel est vissée la bague d'avance, est de préférence de pas inversé par rapport au sens de rotation de la broche d'entraînement, par exemple de pas « à gauche » pour une rotation « à droite », afin d'empêcher tout blocage de l'outil de perçage par un entraînement intempestif de la bague d'avance à partir de la broche.

Selon une autre caractéristique de l'invention, le fourreau est lié par un bras-support d'effort à un axe de force s'étendant parallèlement à l'axe de l'outil de perçage et muni, à son extrémité antérieure, de moyens tels qu'un collier pour son ancrage temporaire sur la canalisation à percer. Ce dispositif assure un équilibrage des efforts de coupe (couple de renversement et effort axial vers l'arrière) lors du travail de l'outil de perçage, et il reporte indirectement ces efforts sur la canalisation. Ainsi il évite de faire supporter ces efforts très importants à la prise en « Té » prémontée sur la canalisation, ce qui garantit la sécurité et la longévité de l'assemblage réalisé puisqu'aucune tension ne risque de subsister dans ladite prise et sa fixation. En outre, ce dispositif de dérivation des efforts donne une grande aisance à l'opérateur qui doit simplement doser et contrôler sensitivement la vitesse d'avance de l'outil par action sur la bague d'avance. Eventuellement, l'axe de force comporte des moyens de commande tels qu'un mécanisme vis-écrou, permettant de supporter une pression de fluide importante dans l'installation et de contrôler le retrait progressif de l'outillage après perçage de la canalisation, en encaissant la poussée due à la pression du fluide.

Un réducteur de vitesse, ayant une fonction de multiplicateur de couple, peut être intercalé entre l'organe moteur et la broche d'entraînement de l'outil de perçage, pour permettre l'emploi d'un moteur de perceuse traditionnelle, de relativement faible puissance, en guise d'organe moteur, même pour réaliser des perçages de diamètre relativement important. Le réducteur de vitesse peut comporter ou non un renvoi d'angle, ce qui permet de placer l'organe moteur soit en ligne avec la broche d'entraînement et l'outil de perçage, soit dans une disposition à angle droit par rapport à ces éléments.

De toute façon, l'invention sera bien comprise à l'aide de la description qui suit, en référence au dessin schématique annexé représentant une forme d'exécution de cet outillage pour le perçage de canalisations de fluide sous pression, ainsi que quelques variantes :

Figure 1 est une vue d'ensemble, avec coupe longitudinale partielle, d'un outillage conforme à la présente invention avec entraînement en ligne avec le foret, sans renvoi d'angle ;

Figure 2 est une vue partielle similaire à figure 1, montrant le foret dans une autre position et illustrant une variante dans laquelle l'entraînement s'effectue avec un renvoi d'angle ;

Figure 3 est une vue similaire aux précédentes, mais montrant la vanne d'isolement fermée après recul du foret, et illustrant une autre variante avec axe de force mécanisé.

Sur les figures est indiqué un conduit de fluide en charge (1) sur lequel a été monté, dans sa position définitive, un raccord en « Té » (2) adapté au diamètre du conduit (1) et maintenu au moyen d'un collier (3) assemblé à ce raccord en « Té » (2) par deux boulons (4). Un joint (5) assure l'étanchéité entre le raccord en « Té » (2) et le conduit (1). Sur le raccord en « Té » (2) est montée par vissage une vanne d'isolement (6), comprenant dans l'exemple considéré un tournant sphérique (7) actionné à l'aide d'une manette (8).

L'outillage proprement dit comprend un raccord de liaison (9) monté de façon étanche, par vissage, sur la vanne d'isolement (6), ainsi qu'un canon de protection et de guidage (10) traversant le raccord de liaison (9) et pouvant être engagé dans la vanne (6) en position d'ouverture. Un joint annulaire (11) assure l'étanchéité entre le raccord (9) et le canon (10) qui traverse librement ce raccord (9), aucune liaison mécanique rigide n'existant entre le raccord (9) et le canon (10).

En arrière du raccord de liaison (9), un fourreau (12) est rendu solidaire du canon (10) par deux circlips (13) et par un joint annulaire (14) assurant l'étanchéité. L'extrémité postérieure du fourreau (12) est munie d'un filetage extérieur (15) qui reçoit une bague d'avance (16), vissable sur ce filetage (15).

A l'intérieur du canon (10) est logé librement un foret (17) classique quant à son hélice et à son affûtage. La queue d'entraînement du foret (17), pouvant être conique et de préférence filetée, est liée à une broche d'entraînement (18) qui se trouve montée à l'intérieur de la bague d'avance (16), à laquelle elle est liée axialement par un double chemin de billes (19) permettant sa libre rotation. Un écrou (20) vissé à l'arrière de la bague d'avance (16) donne la possibilité d'un réglage du jeu axial entre la broche (18) et la bague d'avance (16).

Le filetage (15) assurant la liaison entre la bague d'avance (16) et le fourreau (12) est de préférence un filetage à pas fin et inversé (pas « à gauche »), afin d'empêcher tout blocage du foret (17) par un entraînement en rotation intempestif de la bague (16) provoqué par la rotation « à droite » de la broche (18).

L'étanchéité entre la broche d'entraînement (18) et le fourreau (12) est obtenue par un joint annulaire à lèvre (21), lui-même protégé des copeaux par une rondelle de protection (22) placée en avant de ce joint (21), la chambre annulaire (23) délimitée entre le foret (17) et le fourreau (12) servant de magasin à copeaux.

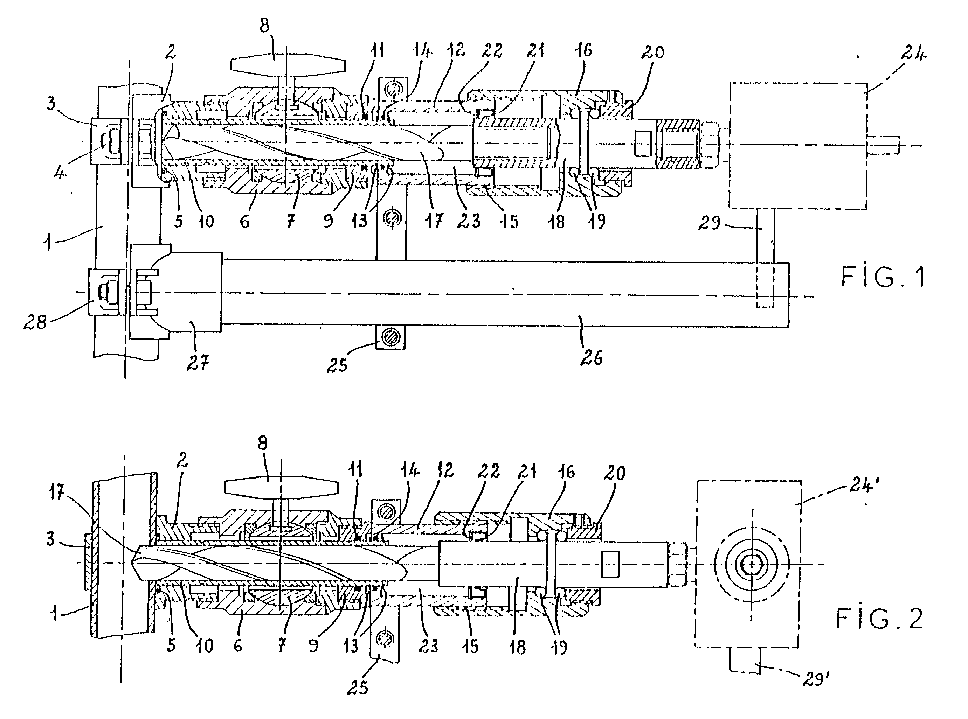

La broche (18) est entraînée en rotation à partir d'un organe moteur non représenté, simple et de faible puissance, tel qu'un moteur de perceuse électrique traditionnelle sans variateur de vitesse. Dans la forme de réalisation représentée à la figure 1, cet entraînement s'effectue par l'intermédiaire d'un réducteur de vitesse (24) par exemple à planétaire, ayant une fonction de multiplicateur de couple, l'organe moteur se trouvant placé en ligne avec la broche (18) et du foret (17).

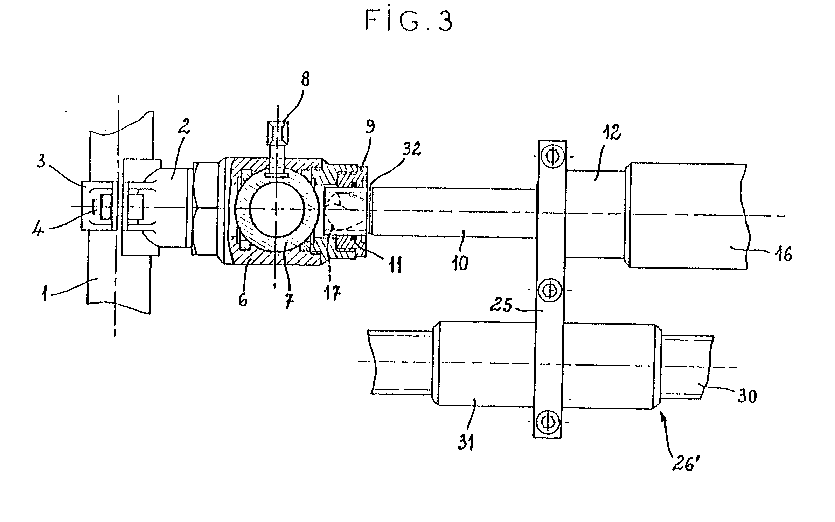

Selon une variante représentée à la figure 2, l'organe moteur est disposé perpendiculairement à l'axe de la broche (18) et du foret (17). Un réducteur de vitesse (24') avec renvoi d'angle par pignons coniques ou vis tangente assure dans ce cas la liaison d'entraînement entre l'organe moteur et la broche (18). L'encombrement de l'ensemble se trouve ainsi réduit.

Le fourreau (12) est encore lié par un bras-support d'effort latéral (25) à un axe de force (26) s'étendant parallèlement à l'axe du foret (17). L'extrémité avant de l'axe de force (26) est solidarisée avec le conduit (1), à quelque distance du raccord en « Té » (2), au moyen d'un collier (27) et d'un contre-collier (28) — voir figure 1. Le réducteur de vitesse (24 ou 24') comporte un levier latéral (29 ou 29') qui permet de faire encaisser le couple réactionnel par l'axe de force (26).

L'utilisation de l'outillage précédemment décrit se fait comme suit :

Sur le conduit (1) préparé par réalisation d'un méplat et toilage de la surface correspondant à la portée du joint (5), on met en place le raccord en « Té » (2) sur lequel est adaptée la vanne d'isolement (6), initialement laissée en position ouverte. Le raccord de liaison (9) est vissé sur la vanne (6), et l'ensemble pré-monté formé par le canon (10), le fourreau (12), la bague d'avance (16), le foret (17) et la broche (18) est introduit. Le bras-support d'effort (25) est engagé librement sur le fourreau (12). Le foret (17) engagé dans la vanne (6) et dans le raccord en « Té » (2) se trouve légèrement en retrait de l'extrémité du canon (10), lui-même en butée contre la paroi du conduit (1) à percer. Le contrôle visuel de cette position initiale correcte — indiquée sur la figure 1 — est donné par la coïncidence, dans un même plan, de l'extrémité antérieure de la bague d'avance (16) et de l'extrémité du filetage (15) du fourreau (12).

Puis l'axe de force (26) est également monté dans le bras-support d'effort (25) est ancré au conduit (1), le jeu de collier et contre-collier (27, 28) étant choisi en fonction du diamètre du conduit à percer. On réalise un blocage en serrant alternativement l'axe de force (26) et le bras (25), afin de conserver un alignement convenable de l'outillage dont l'axe doit rester sensiblement parallèle à l'axe de force (26). Cette dernière opération peut évidemment être simplifiée dans le cas où l'outillage a été déjà utilisé précédemment sur une canalisation de même diamètre, de sorte que le bras-support d'effort (25), l'axe de force (26) et le collier (27) sont déjà montés et verrouillés.

Sur la broche d'entraînement (18) on monte ensuite soit le réducteur de vitesse (24) sans renvoi d'angle, soit le réducteur de vitesse (24') avec renvoi d'angle, selon la disposition choisie pour l'organe moteur qui est également mis en place.

L'organe moteur est alors mis en action pour procéder au perçage du conduit (1). La rotation du foret (17) étant permanente et s'effectuant à une vitesse déterminée, l'opérateur doit simplement régler de façon manuelle et sensitive la vitesse d'avance, en faisant tourner lentement la bague d'avance (16) de manière à la visser sur le filetage (15) du fourreau (12), ce qui entraîne la broche (18) en avant par l'intermédiaire du chemin de billes (19).

Le perçage du conduit (1), qui est ainsi exécuté, est terminé après une certaine course d'avance qui peut être visualisée par un repère circulaire porté par le fourreau (12) et indiquant la position finale de la bague d'avance (16) pour un foret (17) à l'état neuf et un conduit (1) de diamètre donné. La figure 2 montre la position occupée par le foret (17) ainsi que par les autres organes mobiles axialement, en fin de perçage du conduit (1).

Au cours du perçage, les copeaux ou autres déchets d'usinage sont entraînés mécaniquement vers l'arrière par les rainures hélicoïdales du foret (17), agissant comme une vis sans fin à l'intérieur du canon de protection et de guidage (10). En raison de la présence de ce canon (10), les copeaux ne peuvent venir en contact ni avec le raccord en « Té » (2) ni avec les pièces composant la vanne d'isolement (6), et ils sont recueillis dans la chambre annulaire (23).

Après le perçage, le foret (17) est ramené à l'intérieur du canon (10) vers sa position de départ, par dévissage de la bague d'avance (16). Puis l'outillage est retiré avec précaution, après avoir également démonté l'ensemble collier et contre-collier (27, 28) de l'axe de force (26).

Un retrait mécanique, progressif et contrôlé, de l'outillage peut être obtenu dans une variante illustrée par la figure 3, selon laquelle l'axe de force (26') est mécanisé et comprend, par exemple, un ensemble avec vis (30) et douille filetée (31) qui permet de supporter une pression importante dans l'installation.

L'outillage est ainsi reculé jusqu'à une position de retrait représentée sur la figure 3 et indiquée à l'opérateur par un repère circulaire (32) porté par le canon (10). Cette position étant atteinte, la vanne d'isolement (6) est fermée par une rotation d'un quart de tour de son tournant sphérique (7), commandée à l'aide de la manette (8).

L'outillage est alors complètement retiré, y compris le raccord de liaison (9) qui est dévissé et séparé de la vanne (6). On procède au rinçage rapide de cette vanne (6) et du raccord en « Té » (2) pour éliminer les quelques restes éventuels de copeaux ; cette opération est simplifiée par le montage sur la vanne (6) d'une durite souple qui permet la récupération de l'eau de purge dans un récipient.

Finalement, on dispose sur le conduit (1) d'une prise étanche permettant le branchement de tout départ de canalisation ou d'un équipement quelconque.

L'on ne s'éloignerait pas du cadre de l'invention par le recours à des moyens équivalents de ceux décrits et représentés, par exemple :

le canon de protection et de guidage (10) et le fourreau (12) peuvent former un ensemble monobloc ;

le double chemin de billes (19) est remplaçable par un roulement à billes ;

au lieu du foret (17) l'on peut utiliser une mèche ou tout autre outil de perçage rotatif approprié ;

si l'on dispose d'un organe moteur procurant directement une vitesse et un couple convenables, par exemple un moteur de perceuse électrique avec variateur de vitesse classique, le réducteur de vitesse (24 ou 24') peut être supprimé, auquel cas un simple entraîneur est utilisé pour réaliser la liaison entre la broche (18) et l'organe moteur ;

dans le cas où l'axe de force (26') est mécanisé, la commande par le mécanisme vis-écrou (30-31) peut être remplacée par une commande hydraulique par vidange contrôlée d'une enceinte remplie d'huile, et cette fonction est encore réalisable par tous montages appropriés.

**Revendications**

1. Outillage pour le perçage de canalisations de fluide sous pression, sans vidange, en utilisant une prise en « Té » (2, 3) prémontée sur la canalisation à percer (1) et munie d'une vanne d'isolement (6), cet outillage s'adaptant sur la vanne (6) et comprenant un fourreau (12) à l'intérieur duquel est monté un outil de perçage rotatif (17), tel que mèche ou foret à rainures hélicoïdales, déplaçable axialement et apte à être approché de la canalisation à percer (1) en traversant la vanne (6) laissée en position ouverte, l'outil de perçage (17) étant prévu pour être accouplé à un organe moteur d'entraînement en rotation, caractérisé en ce que l'outil de perçage (17) est entouré d'un canon de guidage et de protection (10) apte à traverser la vanne d'isolement (6) en position d'ouverture et lié au moins axialement au fourreau (12), tandis qu'une chambre annulaire (23) de stockage des copeaux, située en arrière du canon de guidage et de protection (10) et de la vanne d'isolement, est délimitée entre le fourreau (12) et l'outil de perçage (17).

2. Outillage pour le perçage de canalisations selon la revendication 1, caractérisé en ce que le canon de guidage et de protection (10) traverse librement un raccord de liaison (9) vissé sur la vanne d'isolement (6) mais non lié mécaniquement audit canon (10), l'étanchéité entre le raccord de liaison (9) et le canon (10) étant assurée par un joint annulaire (11).

3. Outillage pour le perçage de canalisations selon la revendication 1 ou 2, caractérisé en ce qu'il comprend une bague d'avance (16) vissable sur un filetage (15) de l'extrémité postérieure du fourreau (12), une broche d'entraînement (18) de l'outil de perçage (17) étant montée à l'intérieur de la bague d'avance (16) et liée axialement à ladite bague (16).

4. Outillage pour le perçage de canalisations selon la revendication 3, caractérisé en ce que la bague d'avance (16) comporte un écrou (20) pour le réglage du jeu axial entre la broche d'entraînement (18) de l'outil de perçage (17) et ladite bague (16).

5. Outillage pour le perçage de canalisations selon la revendication 3 ou 4, caractérisé en ce qu'un joint annulaire à lèvre (21), protégé par une rondelle (22), est monté entre le fourreau (12) et la broche d'entraînement (18) de l'outil de perçage (17) à l'arrière de la chambre annulaire de stockage des copeaux (23).

6. Outillage pour le perçage de canalisations selon l'une quelconque des revendications 3 à 5, caractérisé en ce que le filetage (15) du fourreau (12), sur lequel est vissée la bague d'avance (16), est de pas inversé par rapport au sens de rotation de la broche d'entraînement (18).

7. Outillage pour le perçage de canalisations selon l'une quelconque des revendications 3 à 6, caractérisé en ce qu'un réducteur de vitesse (24, 24'), avec ou sans renvoi d'angle, est intercalé entre l'organe moteur et la broche d'entraînement (18) de l'outil de perçage (17).

8. Outillage pour le perçage de canalisations selon l'une quelconque des revendications 1 à 7, caractérisé en ce que son fourreau (12) est lié par un bras-support d'effort (25) à un axe de force (26, 26') s'étendant parallèlement à l'axe de l'outil de perçage (17) et muni, à son extrémité antérieure, de moyens (27, 28) pour son ancrage temporaire sur la canalisation à percer (1).

9. Outillage pour le perçage de canalisations selon la revendication 8, caractérisé en ce que l'axe de force (26') comporte des moyens de commande (30, 31) du retrait de l'outillage.

**Claims**

1. Apparatus for drilling pressurised fluid pipes, without discharging the pipes, using a « T » connector (2, 3) mounted on the pipe to be drilled (1) and provided with an isolating valve (6), the apparatus being adapted to the valve (6) and comprising a casing (12) within which is mounted a rotary drilling tool (17), such as a drill or bit having helical flutes, axially displaceable and adapted to be brought towards the pipe to be drilled by passing through the valve (6) in its open position, the drilling tool (17) being adapted to be coupled to a rotary motorised drive device, characterised in that the drilling tool (17) is surrounded by a guiding protective barrel (10) adapted to pass through the isolating valve (6) in its open position and connected at least axially to the casing (12), whilst an annular debris collecting chamber (23), located behind the guiding and protective barrel (10) and the isolating valve, is defined between the casing (12) and the drilling tool (17).

2. Apparatus for drilling pipes according to Claim 1 characterised in that the guiding and protective barrel (10) passes freely through a connecting member (9) screwed onto the isolating valve (6) but not connected mechanically to said barrel (10), sealing between the connecting member (9) and the barrel (10) being effected by an annular joint (11).

3. Apparatus for drilling pipes according to Claims 1 or 2, characterised in that it comprises an advancing ring (16) screwable on to a thread (15) on the rear end of the casing (12), a drive spindle (18) of the drilling tool (17) being mounted within the advancing ring (16) and connected axially to said ring (16).

4. Apparatus for drilling pipes according to Claim 3 characterised in that the advancing ring (16) includes a screw (20) for adjusting the axial play between the drive spindle (18) and the drilling tool (17) and said ring (16).

5. Apparatus for drilling pipes according to Claims 3 or 4 characterised in that an annular lip seal (21) protected by a washer (22), is mounted between the casing (12) and the drive spindle (18) of the drilling apparatus (17) behind the annular debris collecting chamber (23).

6. Apparatus for drilling pipes according to any one of Claims 3 to 5, characterised in that the thread (15) of the casing (12) on which the advancing ring (16) is screwed is of opposite hand with respect to the direction of rotation of the drive shaft (18).

7. Apparatus for drilling pipes according to any one of Claims 3 to 6, characterised in that a speed reducer 24, 24', which may or may not be angled is interposed between the motor device and driving spindle (18) and the drilling tool (17).

8. Apparatus for drilling pipes according to any one of Claims 1 to 7 characterised in that its casing (12) is connected by a force support arm (25) to a support shaft 26, 26' extending parallel to the axis of the drilling tool (17) and provided at its forward end with means 27, 28 for securing it temporarily to the pipe (1) to be drilled.

9. Apparatus for drilling pipes according to Claim 8 characterised in that the support shaft 26' includes means 30, 31 for controlling retraction of the tool.

**Patentansprüche**

1. Vorrichtung zum Anbohren für druckbeaufschlagte Flüssigkeitsleitungen ohne deren Entleerung, mit Verwendung eines T-förmigen Anschlußstückes (2, 3), das auf der anzubohrenden Leitung vormontiert und mit einem Abtrennventil (6) versehen ist, wobei diese Anbohrvorrichtung auf das Ventil (6) paßt und eine Hülse (12) beinhaltet, in derem Inneren ein drehendes Bohrwerkzeug (17) wie Bohrmeißel oder Bohrer mit spiralförmigen Nuten montiert ist, das axial verlagerbar ist und an die anzubohrende Leitung angenähert werden kann, indem es das in der offenen Stellung gelassene Ventil (6) durchquert und wobei das Bohrwerkzeug (17) an ein motorisches Drehantriebsorgan ankuppelbar ist, dadurch gekennzeichnet, daß das Bohrwerkzeug (7) von einem Führungs- und Schutzrohr (10) umgeben ist, das das Abtrennventil (6) in dessen Offenstellung durchqueren kann und das zumindest axial mit der Hülse (12) verbunden ist, während eine Ringkammer (23) für die Spänespeicherung, die hinter dem Führungs- und Schutzrohr (10) und dem Abtrennventil liegt, zwischen der Hülse (12) und dem Bohrwerkzeug (17) begrenzt ist.

2. Anbohrvorrichtung für Leitungen nach Anspruch 1, dadurch gekennzeichnet, daß das Führungs- und Schutzrohr (10) frei ein Verbindungsstück (9) durchquert, das auf das Abtrennventil (6) geschraubt aber nicht mechanisch mit dem genannten Rohr (10) verbunden ist, wobei die Abdichtung zwischen dem Verbindungsstück (9) und dem Rohr (10) durch eine Ringdichtung (11) gegeben ist.

3. Anbohrvorrichtung für Leitungen nach Anspruch 1 oder 2, dadurch gekennzeichnet, daß sie einen Vorschubring (16) beinhaltet, der auf ein Gewinde (15) des hinteren Endes der Hülse (12) schraubbar ist, wobei eine Antriebsspindel (18) des Bohrwerkzeuges (17) im Inneren des Vorschubringes (16) montiert und axial mit dem genannten Ring (16) verbunden ist.

4. Anbohrvorrichtung für Leitungen nach Anspruch 3, dadurch gekennzeichnet, daß der Vorschubring (26) eine Schraubenmutter (20) zur Einstellung des Axialspieles zwischen der Antriebsspindel (18) des bohrwerkzeuges (17) und dem genannten Ring (16) trägt.

5. Anbohrvorrichtung für Leitungen nach Anspruch 3 oder 4, dadurch gekennzeichnet, daß eine ringförmige Lippendichtung (21), geschützt durch eine Scheibe (22), zwischen der Hülse (12) und der Antriebsspindel (18) des Bohrwerkzeuges (17) hinten in der ringförmigen Kammer für die Spänespeicherung (23) montiert ist.

6. Anbohrvorrichtung für Leitungen nach einem der Ansprüche 3 bis 5, dadurch gekennzeichnet, daß das Gewinde (15) der Hülse (12), auf das der Vorschubring (16) geschraubt ist, die umgekehrte Gangrichtung bezüglich der Drehrichtung der Antriebsspindel (18) aufweist.

7. Anbohrvorrichtung für Leitungen nach einem der Ansprüche 3 bis 6, dadurch gekennzeichnet, daß ein Drehzahlminderer (24, 24'), mit oder ohne Winkeltrieb, zwischen das Antriebsorgan und die Antriebsspindel (18) des Bohrwerkzeuges (17) geschaltet ist.

8. Anbohrvorrichtung für Leitungen nach einem der Ansprüche 1 bis 7, dadurch gekennzeichnet, daß seine Hülse (12) durch einen Gegenlagerarm (25) mit einer Kraftaufnahmeachse (26, 26') verbunden ist, die sich parallel zur Achse des Bohrwerkzeuges (17) erstreckt und die an ihrem vorderen Ende mit Mitteln (27, 28) für ihre zeitweilige Verankerung auf der anzubohrenden Leitung (1) versehen ist.

9. Anbohrvorrichtung für Leitungen nach Anspruch 8, dadurch gekennzeichnet, daß die Kraftaufnahmeachse (26') Betätigungsmittel (30, 31) für den Rückzug der Anbohrvorrichtung aufweist.

FIG. 1

FIG. 2

0 143 063

# FIG. 3

0 143 063